# EUROPEAN PATENT SPECIFICATION

(11) **EP 3 367 241 B1**
(45) Date of publication and mention of the grant of the patent: **01.01.2020**
(21) Application number: 17157698.6
(22) Date of filing: 23.02.2017
(51) Int. Cl.: G06F 11/07, G06F 11/36, G06F 9/44

(54) **METHOD, COMPUTER PROGRAM AND SYSTEM FOR PROVIDING A CONTROL SIGNAL FOR A SOFTWARE DEVELOPMENT ENVIRONMENT**
VERFAHREN, COMPUTERPROGRAMM UND SYSTEM ZUR BEREITSTELLUNG EINES STEUERSIGNALS FÜR EINE SOFTWAREENTWICKLUNGSUMGEBUNG
PROCÉDÉ, PROGRAMME INFORMATIQUE ET SYSTÈME POUR FOURNIR UN SIGNAL DE COMMANDE POUR UN ENVIRONNEMENT DE DÉVELOPPEMENT DE LOGICIEL

(43) Date of publication of application: 29.08.2018
(73) Proprietor: Software AG, 64297 Darmstadt (DE); Fraunhofer-Gesellschaft zur Förderung der angewandten Forschung e.V., 80686 München (DE)
(72) Inventor: Weber, Heiko, 64319 Pfungstadt (DE); Zenkoff, Albert, 82383 Hohenpeißenberg (DE); Türpe, Sven, 64347 Griesheim (DE); Poller, Andreas, 64285 Darmstadt (DE); Laabs, Martin, 64367 Mühltal (DE); Holzinger, Philipp, 64285 Darmstadt (DE); Eichler, Jörn, 12049 Berlin (DE)
(74) Representative: 2SPL Patentanwälte PartG mbB

(56) References cited:
- WO-A1-2016/122517
- US-A1- 2003 066 049
- US-B1- 9 244 510

## Description

### Field

Examples relate to a method, a computer program and a system for providing a control signal for a software development environment, more specifically, but not exclusively, based on a plurality of defect reports.

### Background

Software developing companies often receive high volumes of software defect reports, generated continuously by different sources. Defects may for example be reported by automated testing tools, such as static and dynamic analyzers, by users or customers reporting problems they encounter while using a software or online service, and by software developers themselves or quality assurance staff running manual software tests.

As a real-world example, Ostrand et al. (in "Predicting the location and number of faults in large software systems") reported about the development history of an inventory system at AT&T, developed in the programming language Java with a final code base of roughly 500k lines of code. Over a period of 4 years, 17 releases and all stages of development, 5,797 faults have been reported for this software, in average approximately 4 defects per day. In terms of lines of code, this project might only be a midsize project. Large software projects may typically exceed the code base of this inventory system size by a factor of 10 and more.

Developing software at a large scale may comprise two key elements that entail a number of challenges: a large, ever-changing code base, and automated build, test, and deployment processes. Most large software projects today are using agile development methodologies with continuous build, testing, integration and promotion systems automating repetitive tasks. The defect status of software may vary continuously as developers are working, and decisions might frequently be made based on up-to-date information.

US9244510 discloses a defect report tool which calculates a criticality score for individual defect reports based on different defect attributes including defect type, configuration information, and based on bug analysis rules

### Summary

There may be a demand for an improved concept for processing a defect status of a software development project.

Such a demand may be satisfied by the subject matter of the claims.

An example relates to a method for providing a control signal for a software development environment. The method comprises receiving a plurality of defect reports from two or more defect report sources. The plurality of defect reports is related to a plurality of program code portions of a software development project. At least a subset of the plurality of defect reports corresponds to automatically generated defect reports. The method further comprises determining a defect type for individual defect reports of the plurality of defect reports. A defect type indicates a type of software error the defect report relates to. The method further comprises determining a context category of a plurality of context categories for the individual defect reports. The method further comprises determining a defect score for the individual defect reports based on the defect type of the defect report and based on the context category. The defect score indicates a severity of the defect report based on the defect type and the context category of the defect report. The method further comprises generating one or more trigger actions for one or more components of the software development environment based on the defect scores of the individual defect reports. The method further comprises providing the control signal for the software development environment based on the one or more trigger actions.

Analyzing the plurality of defect reports to generate the one or more trigger actions may enable an improved processing of the fault/defect state of the software development project, and may enable an adaption of the software development process to the current fault state, e.g. to enable an automated rollback of portions of the program code leading to faulty components to an earlier state to address the determined fault state.

For example, the receiving of the plurality of defect reports may correspond to receiving a stream of defect reports comprising the plurality of defect reports. For example, the generating of the one or more trigger actions may generate the one or more trigger actions continuously based on newly received defect reports. This may lead to an improved reaction time in response to faults introduced in the software development process.

For example, the control signal may be configured to cause an action of the software development environment. This may enable an automated handling of faults introduced within the software development process. For example, the control signal may be configured to trigger a source code versioning system to rollback one or more program code portions based on the defect scores. Alternatively or additionally, the control signal may be configured to trigger a build system for the software development project to compile at least a portion of program code of the software development project. Alternatively or additionally, the control signal may be configured to trigger a deployment system for the software development project to deploy at least a portion of program code of the software development project to an operational computer system for execution. Alternatively or additionally, the control signal may be configured to trigger at least one of an operating system, application server and program execution framework to start, stop, or change the execution of program code of the software development project. Such actions may enable an automated handling and remedy of the fault.

For example, the defect type may at least partially indicate a defect-category dependent severity of the defect report for a first subset of defect categories of a plurality of defect categories. The context category of a defect report may indicate a weighting factor for a second subset of defect categories of the plurality of defect categories. The determining of the defect score for the individual defect reports may comprise determining the defect score based on the defect-category dependent severity of the defect report for the first subset of defect categories and the weighting factor for the second subset of defect categories. The defect score may be used to decide, whether an adaptation of the software development process via the control signal may be warranted or necessary.

For example, the method may further comprise translating individual defect reports of the plurality of defect reports from one or more pre-defined defect report formats into a common defect report format. The translating may comprise determining at least mandatory fields of the common defect report format for the individual defect reports based on the one or more pre-defined defect report formats of the plurality of defect reports. This may enable using defect reports from a plurality of sources. For example, the one or more pre-defined defect report formats and/or the common defect report format may be based on attribute - value pairs, which may enable a system-independent exchange of information.

For example, the determining of the defect type may comprise extracting a defect code from the defect report or text mining of the defect report. This may improve or enable a machine interpretation of the defect report.

For example, the determining of the defect type may comprise retrieving information related to the defect type from a defect type repository. For example, the determining of the defect type for a defect report of the plurality of defect reports may comprise retrieving description information related to the defect type from a data storage. For example, the determining of the context category for a defect report of the plurality of defect reports may comprise retrieving description information related to the context category from a data storage. For example, the generating of the one or more trigger actions may comprise retrieving information related to the plurality of defect reports from a data storage. Retrieving such information from data repositories/data storage may enable an improved calculation of the defect store, e.g. by retrieving weighting factors and/or information related to a defect severity of a defect type in various defect categories.

For example, the context category may indicate at least one of a functional component of the software development project the program code portion related to an individual defect report is used in, a functional purpose of the program code portion, an application field of the program code portion, and a quantitative characterization of the program code portion. For example, the determining of the context category for at least one defect report of the plurality of defect reports may comprise determining a new context category for the defect report based on characteristics of the program code portion related to the defect report and determining one or more weighting factors for one or more defect categories for the new context category based on the characteristics of the program code portion. This may enable a processing of previously uncategorized program code portions.

For example, the generating of the one or more trigger actions may generate the one or more trigger actions based on a currently received defect report of the plurality of defect reports and based on at least one previously received defect report of the plurality of defect reports.

Using a combination of current and previous reports may enable a more precise determination of the fault state of the software development project.

For example, the generating of the one or more trigger actions may be further based on a plurality of triggering rules of a rule set. The method may further comprise adapting the plurality of triggering rules of the rule set based on information related to an adaptation of the plurality of triggering rules received from a control system. Adapting the triggering rules (e.g. manually or automatically based on previously triggered events) may enable a fine-tuning and/or a self-learning of the triggered actions over time.

For example, the defect score for the individual defect reports may comprise sub-scores for the defect categories of at least a first subset of defect categories. The generating of the one or more trigger actions may be further based on the sub-scores for the defect categories of at least the first subset of defect categories. The sub-scores may allow for a higher granularity of the defect score, e.g. to enable a more precise triggering of trigger actions.

Examples further provide a computer program having a program code for performing the method, when the computer program is executed on a computer, a processor, or a programmable hardware component.

Examples further provide a system for providing a control signal for a software development environment. The system comprises an input configured to receive an input stream comprising a plurality of defect reports from two or more defect report sources. The plurality of defect reports is related to a plurality of program code portions of a software development project. At least a subset of the plurality of defect reports corresponds to automatically generated defect reports. The system further comprises a pre-processor configured to determine a defect type for individual defect reports of the plurality of defect reports. A defect type indicates a type of software error the defect report relates to. The system further comprises a context processor configured to determine a context category of a plurality of context categories for the individual defect reports. The context category indicates at least one of a functional component of the software development project the program code portion related to an individual defect report is used in and a quantitative characterization of the program code portion. The system further comprises a scoring processor configured to determine a defect score for the individual defect reports based on the defect type of the defect report and based on the context category. The defect score indicates a severity of the defect report based on the defect type and the context category of the defect report. The system further comprises a decision event generator, configured to generate one or more trigger actions for one or more components of the software development environment based on the defect scores of the individual defect reports. The system further comprises an output configured to provide the control signal for the software development environment based on the one or more trigger actions.

A further embodiment is a computer program product comprising a computer readable medium having computer readable program code embodied therein, the computer readable program code being configured to implement one of the above methods when being loaded on a computer, a processor, or a programmable hardware component.

### Brief description of the Figures

Some examples of apparatuses and/or methods will be described in the following by way of example only, and with reference to the accompanying figures, in which
- Fig. 1: illustrates a flow chart of a method for providing a control signal for a software development environment;
- Fig. 1a: illustrates a block diagram of a system for providing a control signal for a software development environment;
- Fig. 2: shows a block diagram of an exemplary embodiment of a system for providing a control signal for a software development environment;
- Fig. 3a: shows an example of a minimal report structure;
- Fig. 3b: shows an example of a minimal structure of a defect type;
- Fig. 3c: shows an example of a minimal structure of a context description;
- Fig. 3d: shows an example of attribute-based scoring;
- Fig. 3e: shows an example of a minimal structure of a decision rule; and
- Fig. 4: shows a flow diagram of a method for processing defect reports of an input stream;

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

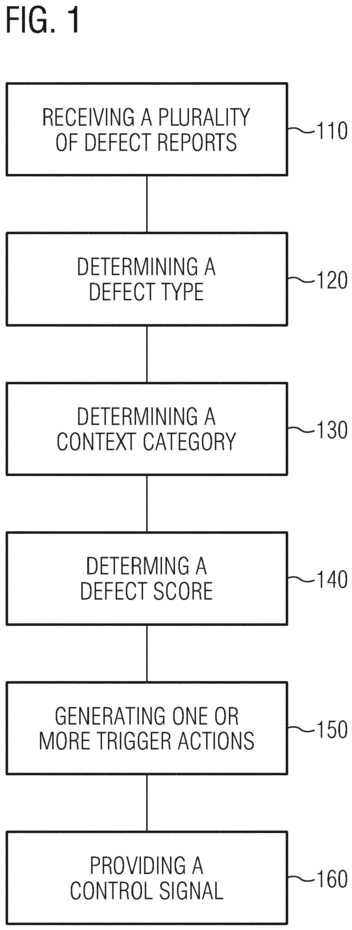

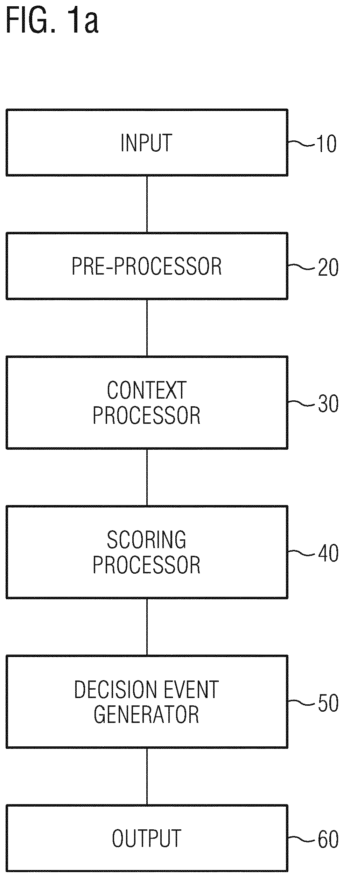

Fig. 1 illustrates a flow chart of a method for providing a control signal for a software development environment. The method comprises receiving 110 a plurality of defect reports from two or more defect report sources. The plurality of defect reports is related to a plurality of program code portions of a software development project. At least a subset of the plurality of defect reports corresponds to automatically generated defect reports. The method further comprises determining 120 a defect type for individual defect reports of the plurality of defect reports. A defect type indicates a type of software error the defect report relates to. The method further comprises determining 130 a context category of a plurality of context categories for the individual defect reports. The method further comprises determining 140 a defect score for the individual defect reports based on the defect type of the defect report and based on the context category. The defect score indicates a severity of the defect report based on the defect type and the context category of the defect report. The method further comprises generating 150 one or more trigger actions for one or more components of the software development environment based on the defect scores of the individual defect reports. The method further comprises providing 160 the control signal for the software development environment based on the one or more trigger actions.

Fig. 1a illustrates a block diagram of a corresponding system for providing the control signal for the software development environment. The system comprises an input 10 configured to receive the input stream. The system further comprises a pre-processor 20 configured to determine the defect type for the individual defect reports of the plurality of defect reports. The system further comprises a context processor 30 configured to determine the context category of the plurality of context categories for the individual defect reports. The system further comprises a scoring processor 40 configured to determine the defect score for the individual defect reports. The system further comprises a decision event generator 50 configured to generate the one or more trigger actions. The system further comprises an output 60 configured to provide the control signal for the software development environment based on the one or more trigger actions. The following part of the description may relate to both the method of Fig. 1 and the corresponding system of Fig. 1a, configured to execute the method of Fig. 1.

For example, the control signal may be a digital control signal. For example, the control signal may comprise control packets based on one or more control packet protocols. For example, the control signal may be transmitted via a network or within a computer system, e.g. using inter-process communication or shared memory. For example, the providing 160 of the control signal may comprise transmitting the control signal via a network (e.g. as individual network packets for the one or more components of the software development environment) or within the computer system, e.g. using inter-process communication or shared memory. For example, the control signal may comprise a plurality of network packets for one or more components of the software development environment. For example, the control signal may be configured to cause an action of the software development environment. For example, the control signal may be configured to trigger a source code versioning system to rollback one or more program code portions based on the defect scores. For example, the control signal may comprise one or more instructions for the source code versioning system (e.g. a Git source code versioning system, a Subversion source code versioning system, or a Mercurial source code versioning system) to trigger the rollback of the one or more program code portions. Additionally or alternatively, the control signal may be configured to trigger a build system (e.g. a system configured to compile at least portions of the program code of the software development project) for the software development project to compile at least a portion of program code of the software development project, e.g. after triggering a rollback within the source code versioning system. For example, the control signal may comprise one or more instructions for the build system. Additionally or alternatively the control signal may be configured to trigger a deployment system (e.g. a system configured to distribute and/or activate portions of the software development project) for the software development project to deploy at least a portion of program code of the software development project to an operational computer system for execution. For example, the control signal may comprise one or more instructions for the deployment system. Additionally or alternatively, the control signal may be configured to trigger at least one of an operating system, application server and program execution framework to start, stop, or change the execution of program code of the software development project. For example, the control signal may comprise one or more instructions for the operating system, application server or program execution framework.

In some examples, the control signal may be further configured to trigger an adjustment of a project planning (e.g. allocation of developers) in a project planning system. In some examples, the control signal may further comprise a software development progress report (e.g. an email) or may be configured to trigger a change to a display (e.g. a dashboard) comprising information related to a current software development progress.

For example, the software development environment may comprise a plurality of components used in the development of software, e.g. at least one of a software development monitoring system, a source code versioning system, a build system, a deployment system, a project tracking system, an application server and a program execution framework.

For example, the receiving 110 of the plurality of defect reports may correspond to receiving a stream of defect reports comprising the plurality of defect reports. For example, the receiving 110 of the plurality of defect report may comprise reading/importing the plurality of defect reports from at least one shared memory (e.g. a volatile memory or a shared folder) and/or receiving the plurality of defect reports via an application interface, e.g. via a network socket or via inter-process communication.

For example, the plurality of defect reports may be a plurality of heterogeneous defect reports, e.g. based on a plurality of pre-defined defect report formats, or the plurality of defect reports may be based on a single shared defect report format. For example, the plurality of defect reports may comprise at least one of a compilation report, a compilation error report, a build tool report, a report from an automated test framework, a report from an automated testing tool, a report from a static or dynamic analyzer, a report from a deployment system, a manually entered (semi-)structured defect report and a manually entered unstructured defect report. For example, the method may further comprise translating individual defect reports of the plurality of defect reports from one or more pre-defined defect report formats into a common defect report format. The translating may comprise determining at least mandatory fields of the common defect report format for the individual defect reports based on the one or more pre-defined defect report formats of the plurality of defect reports. For example, the one or more pre-defined defect report formats and/or the common defect report format may be based on attribute - value pairs, e.g. using one of the eXtensible Markup Language (XML) and the JavaScript Object Notation (JSON). For example, the automatically generated defect reports may correspond to defect reports generated without a user input, e.g. by a build system or an automated testing system. For example, the plurality of defect reports may further comprise (semi-) manually generated defect reports, e.g. generated via an input interface or via a (bug) tracking system.

For example, the two or more defect report sources may comprise at least one of a build system, a deployment system, an automated testing system, an automated test framework, a static or dynamic testing system, a (bug) tracking system, an e-mail server, an application server, a program execution framework and a shared folder used for logging events within the software development environment.

For example, a program code portion of the plurality of program code portions may correspond to one of a line of code, a function, a method, a sub-class, a class, source code file, a plurality of source code files, a plurality of interrelated classes, a computer program component, and a computer program of the software development project. For example, the plurality of program code portions may comprise different scopes of program code for the plurality of program code portions.

At least a subset of the plurality of defect reports may correspond to the entire plurality of defect reports. Alternatively, a subset of the plurality of defect reports may be chosen, e.g. based on one of a time of the defect report, a severity of the defect report (e.g. info, warning or error) or based on the program code portion associated with the defect report.

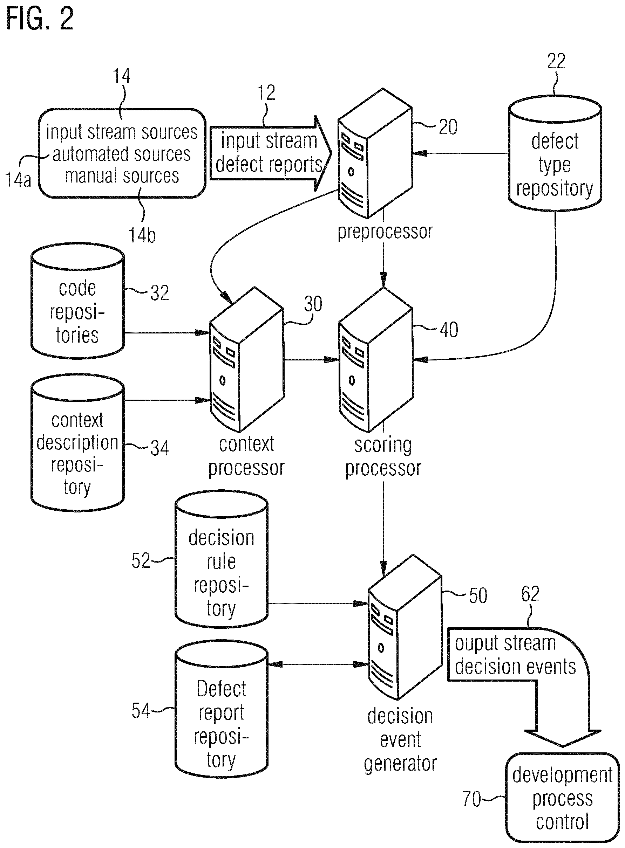

For example, the defect type (among other factors, e.g. the context category) may indicate a severity of the defect report. For example, the type of software error may relate to a source of the defect report (e.g. a build system or an automated testing system) and/or related to an error incurred at the source of the defect report. For example, the determining 120 of the defect type may comprise extracting a defect code from the defect report or text mining of the defect report. For example, the determining 120 may comprise categorizing the defect report according to the defect code or according to keywords comprised in the defect report. For example, a defect code within a defect report may be translated to a generic defect code for the defect type based on a translation rule. For example, the determining 120 of the defect type may comprise retrieving information related to the defect type from a defect type repository, e.g. information related to a severity of the defect type (e.g. for a defect category). For example, the determining 120 of the defect type for a defect report of the plurality of defect reports may further comprise retrieving description information related to the defect type from a data storage (e.g. from a defect type repository 22 of Fig. 2), e.g. to be comprised as additional description within the control signal and/or comprising information related to a severity of the defect type in one or more of a plurality of defect categories. If the determining 120 of the defect type determines that the defect type of a defect report is indeterminable or ambiguous, a default defect type may be assigned to the defect report or the defect report may be excluded from further processing.

The context category may for example indicate a functional component of the software development project the program code portion related to an individual defect report is used in, a functional purpose of the program code portion, an application field of the program code portion, and/or a quantitative characterization of the program code portion. For example, the context category may indicate, whether the program code portion is used within an interface, a database component, a data storage component, a user interface, a programming interface and/or a data processing component. For example, the functional component may be one of an interface, a database component, a data storage component, a user interface, a programming interface and/or a data processing component. For example, the functional component may indicate, whether the program code portion is accessible from outside the software development project (e.g. as programming interface). For example, the functional component may indicate whether the program code portion uses external resources, e.g. operating system functionality, a database, an external application programming interface etc. For example, the function purpose of the program code portion may indicate one of a functionality of the program code portion, a result of the program code portion, an output of the program code portion and an impact of the program code portion. For example, the application field of the program code portion may indicate an application context (e.g. a server context, a mobile application context etc.) the program code portion is used in. For example, the quantitative characterization may characterize one or more elements of a group of a line count of the program code portion, a number of other program code portions called, a number of other program code portions calling the program code portion, and a number of external interfaces accessed by the program code portion. For example, the determining 130 of the context category may comprise categorizing the defect report within the plurality of (existing) context categories. Additionally (or alternatively), the determining 130 of the context category for at least one defect report of the plurality of defect reports may further comprise determining a new context category for the defect report based on (quantitative) characteristics of the program code portion related to the defect report and determining one or more weighting factors for one or more defect categories for the new context category based on the (quantitative) characteristics of the program code portion. For example, the determining 130 of the context category may further comprise obtaining the program code portion or information related to the characteristics of the program code portion from a data storage (e.g. a code repository 32 of Fig. 2). For example, the method may further comprise (pre)computing context categories for program code portions (e.g. based on based on (quantitative and/or qualitative) characteristics of the program code portion) and/or computing/determining one or more weighting functions for one or more defect categories for the new context category based on the (quantitative and/or qualitative) characteristics of the program code portion, e.g. after (when) the program code portion is added/modified within the software development project. For example, the determining 130 of the context category for a defect report of the plurality of defect reports may comprise retrieving description information related to the context category from a data storage (e.g. from a context description repository 34 of Fig. 2), e.g. to be comprised within the control signal when a trigger action is triggered based on the defect report. For example, a context category of the plurality of context categories may comprise/indicate one or more weighting factors for the plurality of defect categories. For example, the description information may comprise information related to the one or more weighting factors for the plurality of defect categories. For example, the determining of the context category may comprise obtaining information related to the context category from the data storage based on the program code portion (and e.g. to verify or update the information related to the context category based on a current version of the program code portion). If the data storage does not comprise the information related to the context category for the program code portion of the defect report, the determining 130 of the context category may determine a new context category.

For example, the determining 140 of the defect score may calculate the defect score for a defect record based on a severity of the defect report for the plurality of defect categories (as indicated by the defect type) weighted with a weighting indicated by the context category of the defect report. For example, the defect type may at least partially indicate a defect-category dependent severity of the defect report for a first subset of defect categories of a plurality of defect categories and the context category of a defect report may indicate a weighting factor for a second subset of defect categories of the plurality of defect categories. For example, the first subset and the second subset may at least partially overlap. The determining 140 of the defect score for the individual defect reports may comprise determining the defect score based on the defect-category dependent severity of the defect report for the first subset of defect categories and the weighting factor for the second subset of defect categories. For example, the determining 140 of the defect score may determine the defect score based on the defect reports received previously, e.g. based on a time window (e.g. the last 24 hours, the last week etc.) and a (e.g. monotonically increasing) scoring function. In some example, the determining 140 of the defect score may further comprise determining an intermediate projected defect score, and refining the intermediate projected defect score over time based on subsequent defect reports. For example, the generating of the one or more trigger actions may be based on the intermediate projected defect score. For example, the determining 140 of the defect score may determine individual defect scores for individual defect reports of the plurality of defect reports and/or one or more comprehensive defect scores over at least a subset of the plurality of defect reports (e.g. as defined by a time window).

For example, a trigger action of the one or more trigger actions may relate to causing an action within one or more components of the software development environment, e.g. within at least one of a source code versioning system, a build system, an automated testing system, an operating system, an application server and a program execution framework. For example, a trigger action of the one or more trigger actions may be based on a trigger rule (specifying when the trigger action is triggered) and result in an action (e.g. of the software development environment). For example, the generating 150 of the one or more trigger actions may generate the one or more trigger actions continuously based on newly received defect reports. Additionally or alternatively, the generating 150 of the one or more trigger actions may generate the one or more trigger actions based on a currently received defect report of the plurality of defect reports and based on at least one previously received defect report of the plurality of defect reports. For example, the generating 150 of the one or more trigger actions may comprise retrieving information related to the plurality of defect reports from a data storage, e.g. information related to the at least one previously received defect report. For example, the method may further comprise storing the plurality of defect reports (e.g. with their defect type and context category) using the data storage. For example, the data storage may correspond to a defect report repository 54 as introduced in connection with Fig. 2.

For example, the generating 150 of the one or more trigger actions may be further based on a plurality of triggering rules of a rule set. For example, the generating 140 of the one or more trigger actions may further comprise retrieving at least portions of the rule set from a data storage, e.g. a decision rule repository 52 of Fig. 2. The method may further comprise adapting the plurality of triggering rules of the rule set based on information related to an adaptation of the plurality of triggering rules received from a control system. For example, the information related to the adaptation of the plurality of triggering rules may be manually added within the control system. Alternatively, the information related to the adaptation may be generated automatically, e.g. based on a reaction of a user of the software development environment to the one or more trigger actions previously triggered. For example, the method may further comprise generating the information related to the adaptation based on a user response to the one or more trigger actions/the control signal (and e.g. based on a machine learning algorithm).

For example, the control signal may comprise one or more instructions for the one or more components of the software development environment based on the one or more trigger actions, e.g. related to the actions defined by the one or more trigger actions. For example, the control signal may comprise individual network packets (or sequences of network packets) for the one or more components of the software development environment.

An input, e.g. the input 10, may correspond to an interface for receiving information, which may be in digital (bit) values according to a specified code, within a module, between modules or between modules of different entities. For example, the input 10 may correspond to an interface to a computer network and/or to other computer programs or computer program components within a computer system.

In embodiments, the pre-processor 20, the context processor 30, the scoring processor 40 and/or the decision event generator 50 may be implemented using one or more processing units, one or more processing devices, any means for processing, such as a processor, a computer or a programmable hardware component being operable with accordingly adapted software. In other words, the described function of the pre-processor 20, the context processor 30, the scoring processor 40 and/or the decision event generator 50 may as well be implemented in software, which is then executed on one or more programmable hardware components. Such hardware components may comprise a general purpose processor, a Digital Signal Processor (DSP), a micro-controller, etc. For example, the pre-processor 20, the context processor 30, the scoring processor 40 and/or the decision event generator 50 may be interrelated components of a computer program or separate computer programs communicating over a network or via inter-process communication.

An output, e.g. the output 60, may correspond to an interface for transmitting information, which may be represented by digital (bit) values according to a specified code or protocol, within a module, between modules, or between modules of different entities. For example, the output 60 may correspond to an interface to a computer network and/or to other computer programs or computer program components within a computer system.

At least some examples provide automated defect scoring to control development processes. Examples may concern automated decisions during large software development projects by processing and scoring of software defect reports to generate decision events. A company developing multiple software products simultaneously in agile methodologies, for example, might want to automatically influence the development processes based on the current state of known defects, which would not be possible in a timely manner if each defects had to be evaluated by humans.

Examples provide a computing device and process to produce from an input stream of defect reports (12) an output stream of decision events (62). A preprocessor (20) may enable that all defect reports contain standardized defect type identifiers and context references. A scoring processor (40) may assign a severity score to each defect report applying a context-dependent scoring function to attributes of defect type descriptions (22). A context processor (30) may determine from program code characteristics the scoring function to be computed by the scoring processor (40). Finally, a decision event generator (50) may apply rules to the scored defect reports to determine which decision events to fire.

Due to the size of the code base and possibly, the number of users, the build, testing, integration and promotion processes may produce large amounts of data on the quality and health of the software. These raw data may be processed:
- On the fly, because they are created continuously or near-continuously.
- Automatically, so that the data can support automated decision making as part of the development processes.

Incoming (e.g. at the input 10) is a stream of reports (e.g. a report stream) about individual defect or problem instances. As output (e.g. at the output 60), decision events as higher-level aggregate information may be desired (e.g. a trigger actions within the control signal).

### Some exemplary use cases:

### Examples of applications:

1. During automated testing, several test frameworks and test suites may produce defect reports. (All) these messages may be joined into a stream of reports and this (input) stream may be processed to make a deployment decision as quickly as possible (immediately after the last test was completed or earlier). To this end, aggregate metrics (e.g. a defect score) may be calculated (for example, counting particular report types or computing an overall (comprehensive, defect) score representing the number and severity across (all) reports) and the deployment decision may depend on reaching or not reaching a defined threshold.
   a. With a suitable (i.e., monotonically increasing) scoring function, a decision might be made as soon as the threshold has been reached.
   b. If testing progress is known, intermediate scores may be projected onto the whole test suite, so that over time, as the stream of reports is being processed, an initial estimate of a metric may be continuously improved.
2. Testing results may be filtered by importance and aggregated by meaningful criteria (e.g. defect type) before reporting them to developers (e.g. as a software development progress report). This may make the reporting of test results less noisy for developers and may allow them to focus on severe issues.
3. Development managers and development teams may see a continuously updated dashboard (configured to display the information related to the current software development progress) representing the most recent testing status and results of the entire code base, broken down by product or component or development team.

Given a repository of defect reports, how can its content be processed and rendered so that the data can be easily consumed, explored, and used to make decisions? As input there may be many semi-structured (defect) reports concerning defects in programs, each report describing an individual issue in one out of several programs. The defects reported may vary in their severity and thus, importance. As output, at least some examples may generate aggregate representations, such as visual charts showing the defect status of multiple products side by side or lists of the most severe defects in each product, e.g. in addition to a control signal configured to trigger actions within a software development environment.

Input Characteristics: Defect reports may describe individual problems in software products. They may:
- Originate from various sources, e.g.:
   ∘ automated testing tools, such as static or dynamic scanners (for example, Veracode, Checkmarx, Fortify, AppScan, Weblnspect)
   ∘ people, such as users/customers having encountered a problem, developers, internal testers, or security staff, and security researchers or consultants.
- Come in high volumes, e.g. as output of an automated testing procedure
- Conform to a general structure but their descriptions might not be standardized
- Be independent of each other.

In some examples, it may be assumed that reports are assigned by reference to particular software products or similar units, so that for each product there may be a substream of pertinent reports.

Severity Rating: As an intermediate attribute, defect severity ratings may represent impact assessments. For example, developers may deem a defect more severe if it affects important functionality than if it only concerns an inessential feature. Developers may also deem defects with catastrophic consequences, such as data loss, more severe than defects that cause mere annoyances. While software developers through their skill and experience can rate the severity of individual issues, this manual approach may become impractical for large numbers and continuous streams of defect reports. Relying on human labor might require significant effort and delay processing and decisions. The severity rating (scoring) of defect reports therefore may be automated if large numbers of defect reports are processed as a basis for timely decisions.

Output Characteristics: The (desired) output may be a series of decision events (e.g. trigger actions), which may be fired whenever certain conditions are detected in the processed input stream of defect reports. A decision event may be a data structure that requests a specific action (e.g. trigger action) somewhere in the development process, generally in an automated component. For example, if automated build and deployment tools are used to fetch the latest source code version, build runnable software from it, and deploy that software to test or production systems, decision events might (through the one or more trigger actions) trigger, modify, delay, or stop operations of these tools.

Decision events might not be mere translations of individual defect reports; they may rather represent complex conditions across a series of reports. One important factor when creating decision events may be defect severities, which may represent an assessment of how important a report is. If a severity score (individual defect score) is available for each defect report, metrics may be computed across a range of reports and be used in decision criteria, e.g. by means of thresholds. As a side effect, scores and derived metrics might also be aggregated and used in other forms, e.g. to generate charts and dashboards.

Fig. 2 shows an exemplary embodiment, which may work as follows:

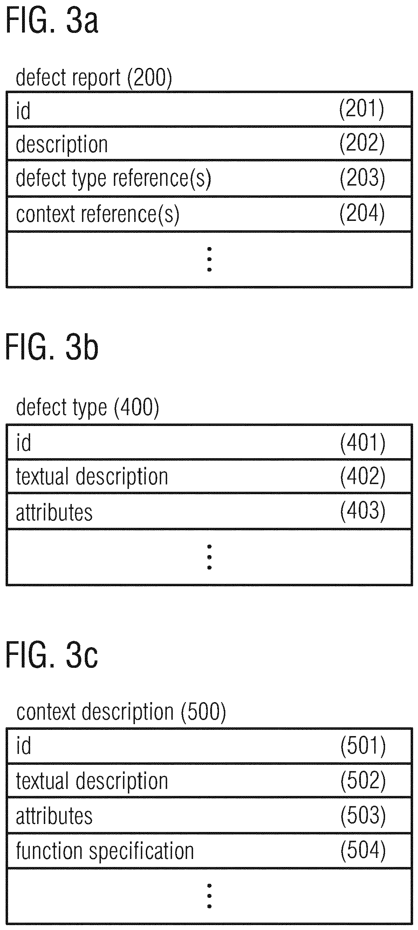

An input stream of defect reports (12) may be passed into the system. This input stream may be generated by various sources (14), which might be automated testing systems (14a) or manual creation (14b). The manual creation interface may comprise integrity checks which provide querying systems that may enable that (all) required information, which may be required for the processing, may be added to the defect report. Each defect report may have a fixed structure but may contain different levels of detailed information about the defect.
- Auxiliary components:
   ∘ A defect type repository (22) may comprise detailed descriptions of possible defect types.
   ∘ The preprocessor (20) may enable (e.g. ensure) that defect reports have properties set, which may be required for the scoring.
   ∘ Code repositories (32) may be configured to store program code of the software for which defect reports are processed.
- The context processor (30) may be configured to determine program characteristics, metrics, and other context attributes from the respective program code and may select and configure a scoring function dependent on context.
- The scoring processor (40) may be configured to compute for each defect report a severity score from attributes associated with the defect type (400, Fig. 3b) using a context-dependent scoring function.
- A defect report repository (54) may be configured to store (all) scored reports for later reference.
- The decision event generator (50) may evaluate newly scored defect reports in the context of historic data from the defect report repository (54) and may trigger events (e.g. trigger actions) according rules in the decision rule repository (52).
- The output stream (62) may be a series of events (e.g. within a control signal) to be consumed by other systems, such as development process control (70). Such events may, for example, trigger or stop the deployment of software based on its overall defect status or initiate automatic up- or downgrading to less buggy versions.
In the following, each component are described in detail.

At least some examples may be tailored to be easily integrable into complex business processes with a high degree of automation. Large companies may often use Business Process Execution Language (BPEL) engines to execute business processes in an automated manner. Such engines may make use of a service-oriented architecture (SOA) to integrate many different systems. Each of these systems may serve a different purpose in the process, e.g., report generation, logging, customer relationship management, resource planning, etc. At least some examples may be part of a business process and may thus be integrated into such kind of a SOA. To be able to do so, it may offer a technical interface that is accessible to other systems such that they can feed reports into the system that require scoring. Likewise, it may require functionality to feed its output, i.e., scored reports, into other systems that follow in the execution of a business process. In addition to these interoperability requirements, there may be constraints that require some examples to process reports in a stream. This may be the case if many different business processes, each potentially with a multitude of instances, are executed asynchronously. In such a setting, events that trigger the scoring process for one or more reports may happen at any time. The frequency and number of incoming reports may vary depending on process-related factors and can hardly be predicted. To not delay dependent processes and integrate seamlessly, the at least some examples may be able to process reports on-demand, i.e., in a stream-like manner.

Defect reports may for example come from two types of sources (Input Stream Sources (14), e.g. the two or more defect report sources):
1. Automated Sources (14a):
   These may be automated testing systems, like static and dynamic testing tools. Since they test for certain types of issues, they might automatically assign a defect type to each report.
2. Manual Sources (14b):
   Developer tests, internal QA tests, customer support issues, etc. These reports may for example be entered manually into the defect reporting system, which may comprise checks for all required information. If the defect type is not set directly, a questionnaire may prompt the submitted with questions, based on which the defect type may be automatically calculated.
Defects may be reported as they become known, regardless of their impact on decisions, and might not be ordered in any particular manner.

Input Stream (12): The input stream may be a sequence of defect reports from input stream sources (14). Each defect report (e.g. 200 of Fig. 3a) may for example comprise at least the data fields shown in Fig. 3a: an identifier (201), a description by free text or structured data (202), one or more defect type references (203), and one or more context references (204). This (minimal) structure may be amended with further data fields as long as the minimal structure (201 ... 204) is present. The defect type reference may be empty or set to a default value when a report is received. Fig. 3a shows a minimal report structure.

Since this is structured information which may be extensible, an XML (eXtensible Markup Language) representation might for example be used, but also other structures like JSON (JavaScript Object Notation) may be suitable.

Example: A code injection defect in the component "SMH-ARGCLI" of the software product "Tamino XML Server" might be described as follows:

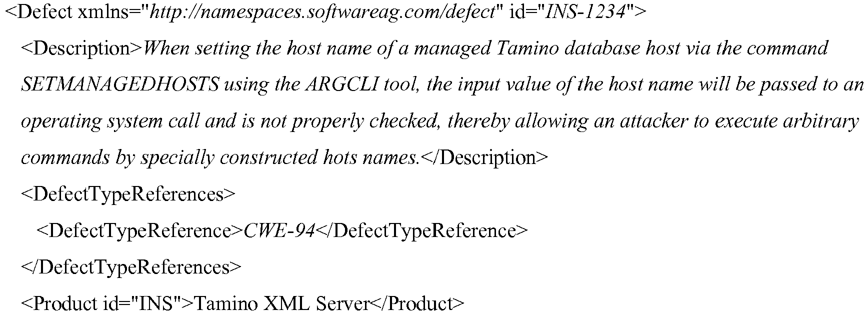

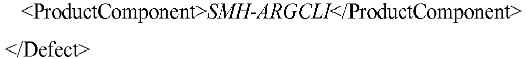

In this example, "INS-1234" constitutes the report id (201), "CWE-94" constitutes the defect type reference (203), and the product identifier "INS" together with the product component identifier "SMH-ARGCLI" constitute the context reference (204).

The preprocessor (20) may enable/ensure that defect reports (200) comprise the required properties for further processing. If the defect report comprises at least one defect type reference (203) and at least one context reference (204) suitable for further processing, the defect report might be left unchanged. If one of them or both are missing, the preprocessor might be configured to search the description (202) for relevant information, e.g. by means of a keyword search or text mining algorithm.

If a defect type reference (203) or context reference (204) cannot be assigned by the preprocessor, for example due to an insufficient description in the report, the preprocessor may be configured to assign a special defect type reference, for example "unclassifiable". Later processing might either ignore such reports or apply default values and functions to them.

The repository of defect types (defect type repository 22) may comprise descriptions of software defect patterns, classified by defect type characteristics. Fig. 3b may show the minimal structure of such a defect type (400). Each defect type may comprise at least a unique identifier (401), a textual description (402), and a structured description by one or more attributes (403). A defect type may comprise further information that is not specifically used here.

Example: An example for a database of defect types in the security area is *the Common Weaknesses Enumeration (CWE),* which describes common types of security software errors (weaknesses). Each CWE record may have a unique identifier, such as *CWE-94* for the weakness type *code injection.* Attributes like *common consequences* and *likelihood of exploit* may describe the characteristics of each type of weakness. In addition, a textual description may provide explanations.

The data taken from CWE XML representation may comprise the information required for the defect types, e.g.:

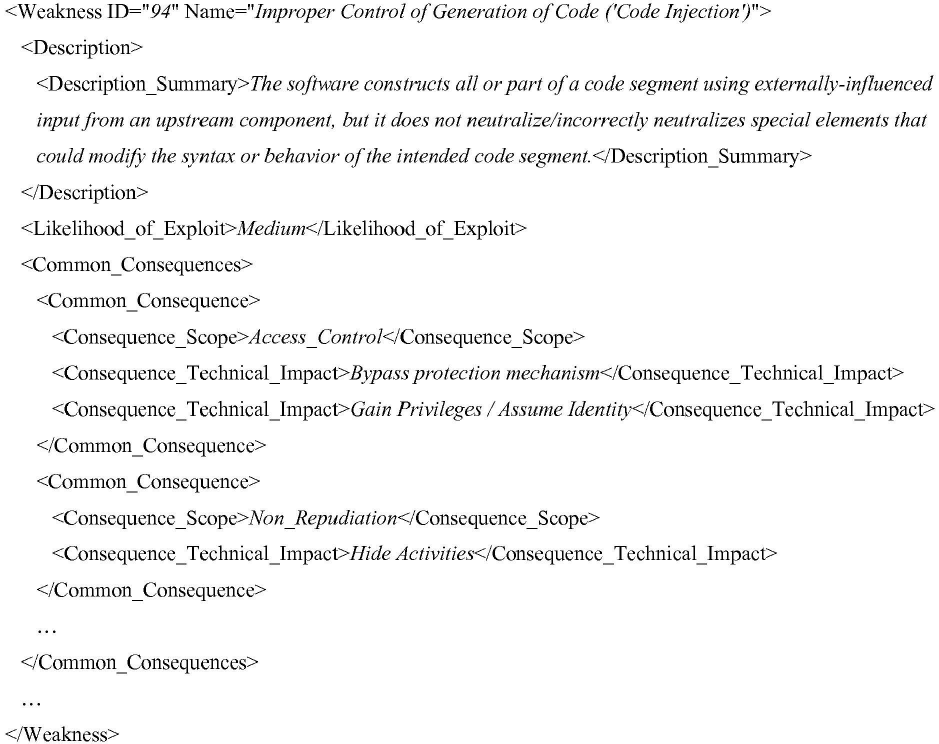

The *Likelihood_of_Exploit*, *Common_Consequences* and other types of structured descriptions may constitute the defect type attributes (403), which may be used as inputs into the scoring function by the scoring processor.

The context processor (30) may be configured to determine for each defect report the scoring function applied by the scoring processor (40) to the report. Reports of the same type (400), or of different types with equivalent sets of type attributes (403), may occur in different programs and in different parts of a program. At least some examples may enable context-dependent scoring and decisions.

From each preprocessed defect report (200) the context processor may be configured to read the context references (204). Using these references the context processor might be configured to (first) consult the context description repository (32). If a corresponding description (500) is found there, the context processor may be configured to verify in the code repositories (32) whether this description is still up to date and if so, may be configured to return the description from the repository.

If no context description is available, the context processor may be configured to use the context references (204) to fetch from the code repository (32) the corresponding program code and metadata. From the program code and metadata the context processor may be configured to compute metrics, such as the number of code lines in a program file, and uses code analysis algorithms to determine qualitative characteristics of the respective program code, such as whether the program calls certain functions or not.

Dependent on the context characteristics thus determined, the context processor may be configured to select a suitable scoring function and parameters for this function. The result may be a context description (500), which the context processor may configured to store in the context description repository (34) for later reuse. This context description may comprise the computed program characteristics and metrics and may specify a suitable scoring function. For better performance, the context processor may be configured to precompute context descriptions either in an asynchronous process browsing the code repository (32) or by updating the context description repository (34), e.g. whenever changes are committed to the code repository.
The retrieved or computed context description may be passed on to the scoring processor (40).

For example, the context processor may receive a defect report with this context reference:

```
 <ContextReference>
 <Description>ARGCLI command line interface</Description>
 <Attributes>
  <ProductComponent>SMH-ARGCLI</ProductComponent>
  <CodeReference>
   <File>logging.c</File>
   <Line>383</Line>
  </CodeReference>
 </Attributes>
 </ContextReference>
```

This context reference may identify a product component (SMH-ARGCLI), a particular source file (logging.c) and a code line where a defect was found (383). Using the product component identifier, the context processor may be configured to retrieve the source code for this component; the file and line reference points to a particular part of this source code. Note that only part of the context reference - the product component identifier - is used in this example.

The context processor may for example be configured to count the lines of program code across (all) source code files for the component SMH-ARGCLI. The context processor may also be configured to apply a pattern matching algorithm to determine that no part of this source code calls any network functions, and may conclude that SMH-ARGCLI may be a command line tool without direct network access. The context processor may thus generate the following context description:

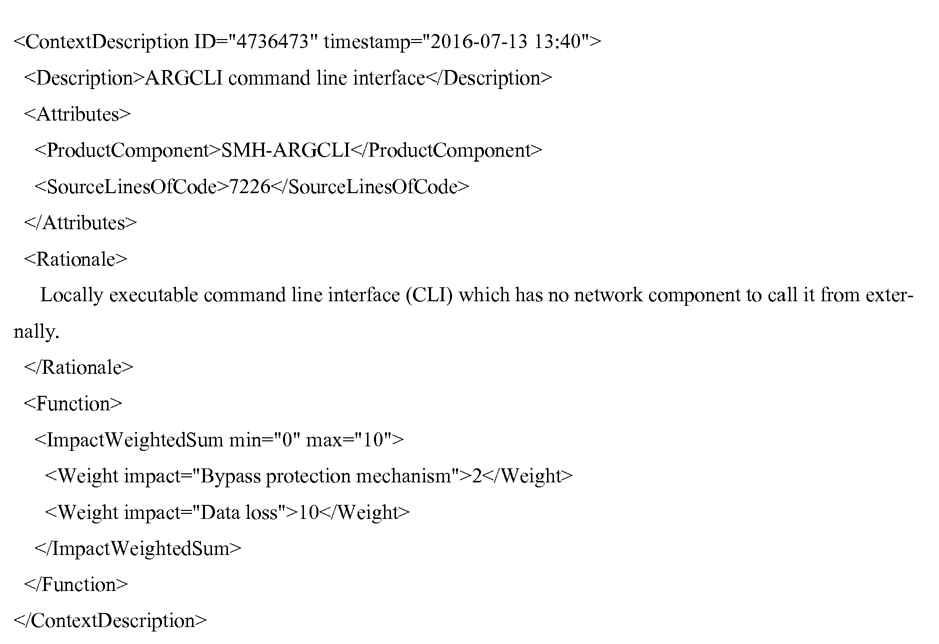

The *SourceLinesOfCode* field comprises the line count (7226). Because the program component was found to be a command line program, the context processor selected as the scoring function a weighted sum of technical impacts and specifies the weights for specific impacts ("Bypass protection mechanism" with a weight of 2).

The context description repository (34) may comprise context descriptions (500 of Fig. 3c) describing the various contexts in which software defects might occur and references to information to identify these for a defect (e.g. names of products, references to source code locations, etc.). Such a context may be, for example, at least one of a specific component of the software, a particular configuration, a specific running installation, or an application domain. As Fig. 3c shows, each context description (500) may comprise at least a context identifier (501), a textual description (502), a set of context attributes (503) describing the context and allowing an automatic mapping based on the defect descriptions, and a function specification (504).Fig. 3c shows a minimal structure of the context descriptions.

Context attributes (503) may represent characteristics of a software product, component, or development project that affect the scoring of individual defects or that may be required to compute aggregate metrics. A function specification (504) may specify in formal language an algorithm, a mathematical function, or parameters of an algorithm or function so that the scoring processor (40) is enabled compute the (scoring) function for some input. (Scoring) Functions may for example be specified (a) implicitly by specifying only parameters of a function hardcoded into the scoring processor, (b) as a choice by identifier, possibly accompanied by a function-specific set of parameters, or (c) as a program to be interpreted and executed by the scoring processor.

Example: If defect types (400) are characterized by their technical impacts, context descriptions (500) may represent the importance of each possible technical impact for a particular software product or component as numeric weights. As its attributes, a context description may comprise for each possible impact a value, say, between 0 and 10, which the scoring processor (40) may be configured to use in its computation. A value of 0 means in this example that a particular consequence (e.g. *data loss*) does not matter at all, whereas a value of 10 means that this consequence is considered catastrophic. Dependent on these weights, defects with the same technical consequences may be rated differently in different products, components, or projects. A function specification by identifier and parameters might look like this:

```
 <Function>
  <ImpactWeightedSum min="0" max="10">
   <Weight impact="Bypass protection mechanism">2</Weight>
   <Weight impact="Data loss">10</Weight>
  </ImpactWeightedSum>
 </Function>
```

The keyword *ImpactWeightedSum* may identify the scoring function described above and the *Weight* elements specify parameters of this function.

The code repository (32) may be configured to store source code (e.g. program code, the program code portions) and metadata of the programs for which defect reports are being processed. The code repository may for example be organized as a hierarchical file system or similar data structure, so that (a) for any software product, component or other unit of software in the repository (all) files belonging to it may be identified, and (b) for each file, aggregate units like components and products may be identified to which the file belongs. In addition to source code files and other program resources, the code repository may comprise any number of auxiliary files and metadata, such as manifest files, build instructions, version histories, etc. Such additional information might not be essential but if present may be used by the context processor (e.g. to determine the context category/a new context category). Context references (204) may point to any node in the hierarchy, for example. Source code repositories of this kind are commonly used in software development. At least some examples may use these existing repositories as an information source.

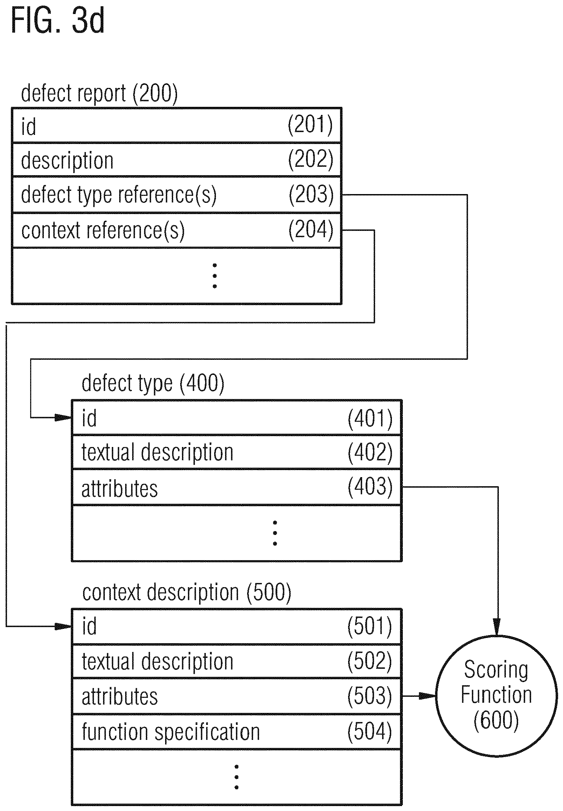

The scoring processor (40) may be configured to compute for each defect report one or more numeric values (scores/defect scores) using the scoring function (504) specified by the context processor (30). As shown in Fig. 3d, the scoring processor may be configured to use the defect type reference(s) (203) to obtain a defect type description (400) from the defect type repository (22), and the context reference(s) (204) to obtain a context description (500) from the context processor (30). The context description (500) (of a context category of a defect report) may specify a scoring function (504) (e.g. for determining 140 the defect score of the defect report), which the scoring processor may be configured to compute for the attributes (severity of the defect for one or more defect categories) (403) of the defect type (400). Optionally the scoring function may be configured to permit and require further inputs, such as attributes (503) of the context description (500). The defect report, its score and the context description may then be passed on to the decision event generator (50). Fig. 3d shows attribute-based scoring.

Example: The scoring processor (40) may be configured to receive a defect report (200) with a single defect type reference (203) pointing to defect ID "94 " (see the example given for the defect type repository (22) above) and a context reference (204) identifying the product component as *"SMH-ARGCLI"* as in the example given for the context processor (30). The scoring processor may be configured to obtain from the context processor (30) the respective context description (500), which may comprise this function specification (504):

```
 <Function>
  <ImpactWeightedSum min="0" max="10">
   <Weight impact="Bypass protection mechanism">2</Weight>
   <Weight impact="Data loss">10</Weight>
  </ImpactWeightedSum>
 </Function>
```

This specification may instruct (tell) the scoring processor to compute the severity score of the defect report as a weighted sum over the technical impacts specified in the defect type description (400), and to assign the weight "2" to the impact "Bypass protection mechanism" and the weight "10" to the impact "Data loss".

The scoring processor may be configured to fetch from the defect type repository (22) the defect type description (400) for defect ID (401) "94" and to extract from its attributes (403) a list of technical impacts associated with this defect type, say:
- "Bypass protection mechanism"
- "Gain Privileges / Assume Identity"
- "Hide Activities".
The context processor may be configured to assign the weight "2" to "Bypass protection mechanism" according to the function specification shown above and "0" as a default value to the other two impacts not mentioned in the function specification. "Data loss" is not present in the defect type description (400) and therefore not considered. The scoring processor may be configured to assign the sum "2" of these values to the defect report as its score.

(All) scored defect reports may be stored in a defect report repository (54). The defect report repository may be a database that stores defect reports in a suitable database scheme and allows retrieval of individual reports and sets of reports through a query language or other query interface. Common bug tracking systems, for example, have such databases at their core. Scored defect reports may be stored to support complex decision rules that take historical data into account. The stored reports may also be used to investigate and explain decision events and for any other purpose that requires a collection of processed defect reports. The decision report repository (54) may be updated by the decision event generator (50) with the data it receives, and the decision event generator (50) be configured to consult the defect report repository (54) whenever it needs historic data to evaluate a decision rule.

The decision event generator (50) may be configured to receive a stream of scored defect reports from the scoring processor and outputs decision events when certain conditions are fulfilled by an individual defect report or by a series of reports in the stream. To this end, the decision event generator may be configured to (first) store each received defect report in the defect report repository (54) to maintain a history of the stream. The decision event generator may be configured to (then) select those decision rules that pertain to the defect report. Decision rules may be organized by any type of information present in scored defect reports or accompanying context descriptions, for example, by context references or product identifiers. The decision event generator may be configured to evaluate each selected rule, computing a yes/no decision for the respective decision event specified by the rule. If the decision event comprises variable parameters, the decision event generator may be configured to compute the required parameter values. If a decision rule requires the evaluation of stream history together with the new report being processed, the decision event generator may be configured to query the defect report repository for previously processed reports as needed before evaluating the decision rule. For each fulfilled decision rule, (the decision event generator may be configured to affect that) a decision event data structure may be created, required parameters filled in, and the decision event be added to the output stream.

Example: The decision event generator may be configured to receive a defect report with score "2" for the product component identified as "SMH-ARGCLI". For the product component "SMH-ARGCLI" two decision rules may be found:
- Issue an alert whenever a defect report is scored 9 or higher.
- Stop software deployment whenever the accumulated score of all defect reports seen during the last 24 hours exceeds 20.
The first decision rule might not be fulfilled as the score is below the threshold of 9, and therefore no decision event might be created for this rule. To evaluate the second rule, the decision event generator may be configured to fetch from the defect report repository (54) (all) reports received in the last 24 hours with the context identifier "SMH-ARGCLI" and to sum up their scores. If the sum exceeds the threshold of 20, a "suspend deployment" event may be added to the output stream.

Decision rules (e.g. trigger rules) may specify events to be produced as the output of our invention and the conditions under which a particular event shall occur. The decision rule repository (52) may be configured to store a set of decision rules in a suitable data structure so that the decision event generator can retrieve the rules pertinent to a defect report by querying the repository.

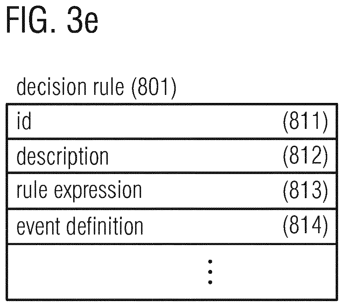

Each decision rule may, in an example, comprise at least a unique identifier (811 of Fig. 3e), an optional textual description (812), a rule expression (813) which comprises Boolean expressions that will result in an event being created if they evaluate to true, and an event definition (814) which defines the data of the event being created. A decision rule may comprise further information that is not specifically used here. Fig. 3e shows a minimal structure of a decision rule.

Rule expressions (813) (e.g. of the trigger rules) may for example be encoded in a formal language that allows at least logical and arithmetic expressions with score values and the attributes of defect reports and context descriptions as their operands, so that conditions and calculations can be expressed. The expression language may support further types of statements in addition to this minimum requirement, such as processing instructions for the decision event generator.

Event definitions (814) may be templates that define the constant parts of an output event and comprise parameter references or other expressions to define the variable elements. For example, a decision event may reference the defect reports that fulfilled the conditions of the decision rule.

Example: The following example shows a possible decision rule. Its rule expression may state to which incoming defect reports it might (should) be applied ("ANY") and may specify the conditions for firing an event based on details of current defect report and previous ones for the same product. In this example, the defect report repository (54) may be queried for previous reports pertinent to the same product less than three days old, filtered by a score threshold of 9. The resulting defects may be counted and the event may be fired if there are more than 5.

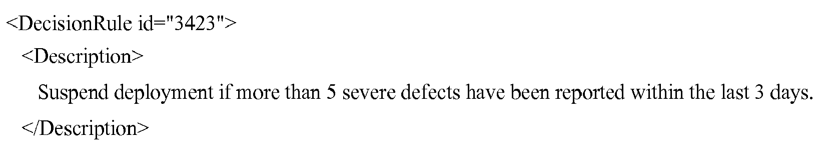

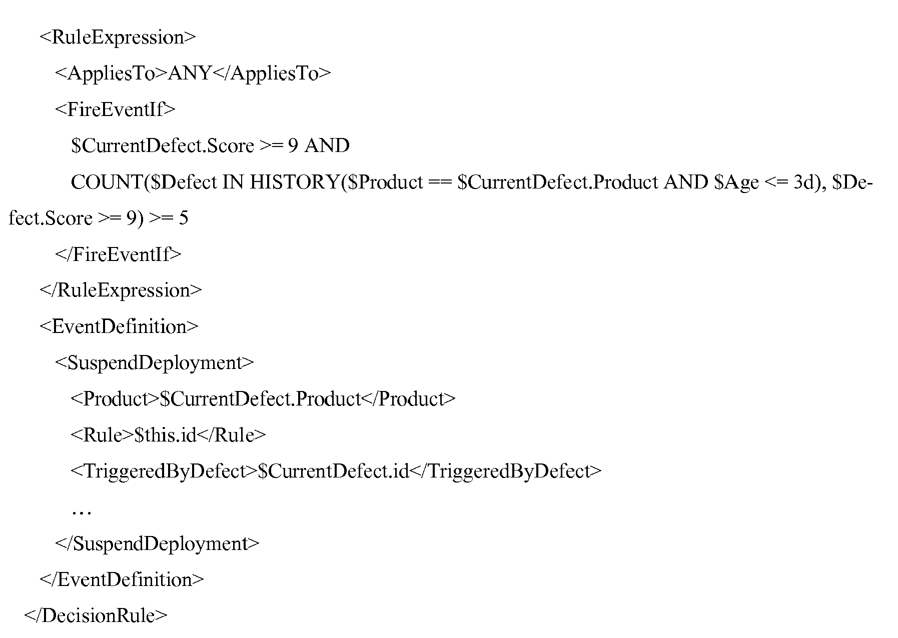

The code enclosed in <EventDefinition>...</EventDefinition> may constitute the output event. Embedded in it are expressions starting with a "$" sign, which may be replaced by the respective variable values when an event output is created from this template, for example.

The output stream (62) (e.g. the control signal) out of the systems may be events (e.g. trigger actions) which are passed to an event bus which may be connected to decision systems that can directly control the software development process. Such a system may be, for example, a development process control (70) system, which may stop promotions, trigger escalations, replan development efforts to specific investment area, alert managers, etc.

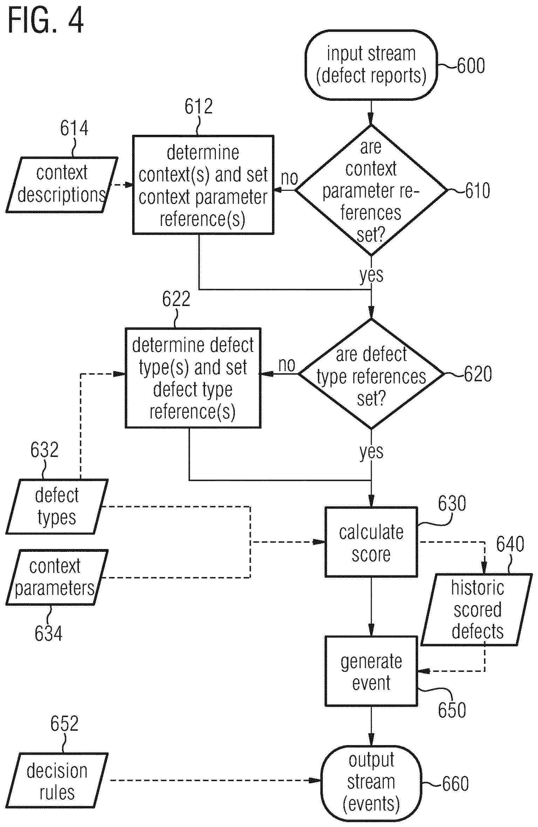

Processing Sequence of the Defect Stream: Fig. 4 shows a flow diagram of (steps of) a method that is/are performed when processing the defect reports of the input stream all the way to producing the events of the output stream:
The method comprises receiving an input stream (of defect reports) 600. The method further comprises checking 610, whether the context parameter references are set. If not, the contexts are determined and the context parameters are set 612, e.g. based on context descriptions 614. Afterwards, or if the context parameters were set from the beginnings, the method further comprises checking whether the defect type references are set 620. If not, the defect type(s) is/are determined and set 622, e.g. based on defect types 632. After determining the defect type(s) (or if they have been set from the beginning), the method further comprises calculating the score 630, e.g. based on the defect types 632 and based on context parameters 634. The method further comprises generating an (decision) event 650, based on the calculated score 630 and e.g. based on historic scored defects 640 and based on decision rules 652, to obtain an output stream of events 660.

More details and aspects of the method and system are mentioned in connection with the proposed concept or one or more examples described above (e.g. Fig. 1 and 1a). The method and system may comprise one or more additional optional features corresponding to one or more aspects of the proposed concept or one or more examples described above or below.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons.

Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A computer-implemented method for providing a control signal for a software development environment, the method comprising:
receiving (110) a plurality of defect reports from two or more defect report sources, wherein the plurality of defect reports is related to a plurality of program code portions of the software development project, wherein at least a subset of the plurality of defect reports corresponds to automatically generated defect reports;
determining (120) a defect type for individual defect reports of the plurality of defect reports, wherein a defect type indicates a type of software error the defect report relates to, wherein a defect type further indicates a defect-category dependent severity of the defect report for a subset of defect categories of a plurality of defect categories;
determining (130) a context category of a plurality of context categories for the individual defect reports,
wherein the context category indicates a functional component, such as one of an interface, a database component, a data storage component, a user interface, a programming interface and/or a data processing component, of the software development project the program code portion related to an individual defect report is used in,
wherein the context category further indicates one or more weighting factors for the plurality of defect categories;
determining (140) a defect score for the individual defect reports based on the defect type of the defect report and based on the context category, wherein the defect score indicates a severity of the defect report based on the defect type and the context category of the defect report,
wherein the determining (140) of the defect score calculates the defect score for a defect report based on a severity of the defect report for the plurality of defect categories, as indicated by the defect type, weighted with a weighting factor indicated by the context category of the defect report;
generating (150) one or more trigger actions for one or more components of the software development environment based on the defect scores of the individual defect reports; and
providing (160) the control signal for the software development environment based on the one or more trigger actions, wherein the control signal is configured to cause an action of the software development environment.

2. The method according to claim 1, wherein the receiving (110) of the plurality of defect reports corresponds to receiving a stream of defect reports comprising the plurality of defect reports,
and/or wherein the generating (150) of the one or more trigger actions generates the one or more trigger actions continuously based on newly received defect reports.

3. The method according to claim 1, wherein the control signal is configured to trigger a source code versioning system to rollback one or more program code portions based on the defect scores,
or wherein the control signal is configured to trigger a build system for the software development project to compile at least a portion of program code of the software development project,
or wherein the control signal is configured to trigger a deployment system for the software development project to deploy at least a portion of program code of the software development project to an operational computer system for execution,
or wherein the control signal is configured to trigger at least one of an operating system, application server and program execution framework to start, stop, or change the execution of program code of the software development project.

4. The method according to one of the previous claims further comprising translating individual defect reports of the plurality of defect reports from one or more pre-defined defect report formats into a common defect report format, and wherein the translating comprises determining at least mandatory fields of the common defect report format for the individual defect reports based on the one or more pre-defined defect report formats of the plurality of defect reports.

5. The method according to claim 4, wherein the one or more pre-defined defect report formats and/or the common defect report format are based on attribute - value pairs.

6. The method according to one of the previous claims, wherein the determining (120) of the defect type comprises extracting a defect code from the defect report or text mining of the defect report.

7. The method according to one of the previous claims, wherein the determining (120) of the defect type comprises retrieving information related to the defect type from a defect type repository,
and/or wherein the determining (120) of the defect type for a defect report of the plurality of defect reports comprises retrieving description information related to the defect type from a data storage,
and/or wherein the determining (130) of the context category for a defect report of the plurality of defect reports comprises retrieving description information related to the context category from a data storage,
and/or wherein the generating (150) of the one or more trigger actions comprises retrieving information related to the plurality of defect reports from a data storage.

8. The method according to one of the previous claims, wherein the determining (130) of the context category for at least one defect report of the plurality of defect reports comprises determining a new context category for the defect report based on characteristics of the program code portion related to the defect report and determining one or more weighting factors for one or more defect categories for the new context category based on the characteristics of the program code portion.

9. The method according to one of the previous claims, wherein the generating (150) of the one or more trigger actions generates the one or more trigger actions based on a currently received defect report of the plurality of defect reports and based on at least one previously received defect report of the plurality of defect reports.

10. The method according to one of the previous claims, wherein the generating (150) of the one or more trigger actions is further based on a plurality of triggering rules of a rule set, wherein the method further comprises adapting the plurality of triggering rules of the rule set based on information related to an adaptation of the plurality of triggering rules received from a control system.

11. The method according to one of the previous claims, wherein the defect score for the individual defect reports comprises sub-scores for the defect categories of at least a first subset of defect categories, and wherein the generating (150) of the one or more trigger actions is further based on the sub-scores for the defect categories of at least the first subset of defect categories.

12. A computer program having a program code for performing any of the methods according to one of the previous claims, when the computer program is executed on a computer, a processor, or a programmable hardware component.

13. A computer-implemented system for providing a control signal for a software development environment, the system comprising
an input (10) configured to receive an input stream comprising a plurality of defect reports from two or more defect report sources, wherein the plurality of defect reports is related to a plurality of program code portions of the software development project, wherein at least a subset of the plurality of defect reports corresponds to automatically generated defect reports;
a pre-processor (20) configured to determine a defect type for individual defect reports of the plurality of defect reports, wherein a defect type indicates a type of software error the defect report relates to, wherein a defect type further indicates a defect-category dependent severity of the defect report for a subset of defect categories of a plurality of defect categories;
a context processor (30) configured to determine a context category of a plurality of context categories for the individual defect reports,
wherein the context category indicates a functional component, such as one of an interface, a database component, a data storage component, a user interface, a programming interface and/or a data processing component, of the software development project the program code portion related to an individual defect report is used in,
wherein the context category further indicates one or more weighting factors for the plurality of defect categories;
a scoring processor (40), configured to determine a defect score for the individual defect reports based on the defect type of the defect report and based on the context category, wherein the defect score indicates a severity of the defect report based on the defect type and the context category of the defect report,
wherein the determining of the defect score calculates the defect score for a defect report based on a severity of the defect report for the plurality of defect categories, as indicated by the defect type, weighted with a weighting factor indicated by the context category of the defect report;
a decision event generator (50), configured to generate one or more trigger actions for one or more components of the software development environment based on the defect scores of the individual defect reports; and
an output (60) configured to provide the control signal for the software development environment based on the one or more trigger actions, wherein the control signal is configured to cause an action of the software development environment.

## Patentansprüche

1. Ein computerimplementiertes Verfahren zum Bereitstellen eines Steuersignals für eine Softwareentwicklungsumgebung, das Verfahren umfassend:
Empfangen (110) einer Mehrzahl von Fehlermeldungen von zwei oder mehr Fehlermeldungsquellen, wobei die Mehrzahl von Fehlermeldungen auf eine Mehrzahl von Programmcodeabschnitten des Softwareentwicklungsprojekts bezogen ist, wobei zumindest eine Teilmenge der Mehrzahl von Fehlermeldungen automatisch erzeugten Fehlermeldungen entspricht;
Bestimmen (120) eines Fehlertyps für einzelne Fehlermeldungen aus der Mehrzahl von Fehlermeldungen, wobei ein Fehlertyp einen Typ eines Softwarefehlers anzeigt, auf den sich die Fehlermeldung bezieht, wobei ein Fehlertyp ferner eine von der Fehlerkategorie abhängige Schwere der Fehlermeldung für eine Teilmenge von Fehlerkategorien einer Mehrzahl von Fehlerkategorien anzeigt;
Bestimmen (130) einer Kontextkategorie einer Mehrzahl von Kontextkategorien für die einzelnen Fehlermeldungen,
wobei die Kontextkategorie eine funktionale Komponente, wie beispielsweise eine von einer Schnittstelle, einer Datenbankkomponente, einer Datenspeicherkomponente, einer Benutzerschnittstelle, einer Programmierungsschnittstelle und/oder einer Datenverarbeitungskomponente, des Softwareentwicklungsprojekts anzeigt, in dem der Programmcodeabschnitt bezogen auf eine einzelne Fehlermeldung verwendet wird,
wobei die Kontextkategorie ferner einen oder mehrere Gewichtungsfaktoren für die Mehrzahl von Fehlerkategorien anzeigt;
Bestimmen (140) einer Fehlerbewertung für die einzelnen Fehlermeldungen basierend auf dem Fehlertyp der Fehlermeldung und basierend auf der Kontextkategorie, wobei die Fehlerbewertung eine Schwere der Fehlermeldung basierend auf dem Fehlertyp und der Kontextkategorie der Fehlermeldung anzeigt,
wobei das Bestimmen (140) der Fehlerbewertung die Fehlerbewertung für eine Fehlermeldung basierend auf einer Schwere der Fehlermeldung für die Mehrzahl von Fehlerkategorien berechnet, wie durch den Fehlertyp angezeigt, gewichtet mit einem durch die Kontextkategorie der Fehlermeldung angezeigten Gewichtungsfaktor;
Erzeugen (150) einer oder mehrerer Auslöseraktionen für eine oder mehrere Komponenten der Softwareentwicklungsumgebung basierend auf den Fehlerbewertungen der einzelnen Fehlermeldungen; und
Bereitstellen (160) des Steuersignals für die Softwareentwicklungsumgebung basierend auf der einen oder den mehreren Auslöseraktionen, wobei das Steuersignal konfiguriert ist zum Verursachen einer Aktion der Softwareentwicklungsumgebung.

2. Das Verfahren gemäß Anspruch 1, wobei das Empfangen (110) der Mehrzahl von Fehlermeldungen einem Empfangen eines Stroms von Fehlermeldungen entspricht, der die Mehrzahl von Fehlermeldungen umfasst,
und/oder wobei das Erzeugen (150) der einen oder der mehreren Auslöseraktionen die eine oder die mehreren Auslöseraktionen kontinuierlich basierend auf neu empfangenen Fehlermeldungen erzeugt.

3. Das Verfahren gemäß Anspruch 1, wobei das Steuersignal konfiguriert ist zum Auslösen eines Quellcode-Versionssystems, um einen oder mehrere Programmcodeabschnitte basierend auf den Fehlerbewertungen zurückzusetzen,
oder wobei das Steuersignal konfiguriert ist zum Auslösen eines Build-Systems für das Softwareentwicklungsprojekt, um zumindest einen Programmcodeabschnitt des Softwareentwicklungsprojekts zu kompilieren,
oder wobei das Steuersignal konfiguriert ist zum Auslösen eines Verteilungssystems für das Softwareentwicklungsprojekt, um zumindest einen Programmcodeabschnitt des Softwareentwicklungsprojekts für ein Inbetrieb-Computersystem zur Ausführung einzusetzen,
oder wobei das Steuersignal konfiguriert ist zum Auslösen von zumindest einem von einem Betriebssystem, einem Anwendungsserver und einem Programmausführungs-Framework, um die Programmcodeausführung des Softwareentwicklungsprojekts zu starten, zu stoppen oder zu ändern.

4. Das Verfahren gemäß einem der vorherigen Ansprüche, ferner umfassend ein Übersetzen einzelner Fehlermeldungen der Mehrzahl von Fehlermeldungen von einem oder mehreren vordefinierten Fehlermeldungsformaten in ein gemeinsames Fehlermeldungsformat, und wobei das Übersetzen ein Bestimmen von zumindest Pflichtfeldern des gemeinsamen Fehlermeldungsformats für die einzelnen Fehlermeldungen basierend auf dem einen oder den mehreren vordefinierten Fehlermeldungsformaten der Mehrzahl von Fehlermeldungen umfasst.

5. Das Verfahren gemäß Anspruch 4, wobei das eine oder die mehreren vordefinierten Fehlermeldungsformate und/oder das gemeinsame Fehlermeldungsformat auf Attribut-Wert-Paaren basieren.

6. Das Verfahren gemäß einem der vorherigen Ansprüche, wobei das Bestimmen (120) des Fehlertyps ein Extrahieren eines Fehlercodes aus der Fehlermeldung oder ein Text Mining der Fehlermeldung umfasst.

7. Das Verfahren gemäß einem der vorherigen Ansprüche, wobei das Bestimmen (120) des Fehlertyps ein Abrufen von Information bezogen auf den Fehlertyp aus einem Fehlertyp-Repositorium umfasst,
und/oder wobei das Bestimmen (120) des Fehlertyps für eine Fehlermeldung der Mehrzahl von Fehlermeldungen ein Abrufen von Beschreibungsinformation bezogen auf den Fehlertyp aus einem Datenspeicher umfasst,
und/oder wobei das Bestimmen (130) der Kontextkategorie für eine Fehlermeldung der Mehrzahl von Fehlermeldungen ein Abrufen von Beschreibungsinformation bezogen auf die Kontextkategorie aus einem Datenspeicher umfasst,
und/oder wobei das Erzeugen (150) der einen oder der mehreren Auslöseraktionen ein Abrufen von Information bezogen auf die Mehrzahl von Fehlermeldungen aus einem Datenspeicher umfasst.

8. Das Verfahren gemäß einem der vorherigen Ansprüche, wobei das Bestimmen (130) der Kontextkategorie für zumindest eine Fehlermeldung der Mehrzahl von Fehlermeldungen ein Bestimmen einer neuen Kontextkategorie für die Fehlermeldung basierend auf Charakteristika des Programmcodeabschnitts bezogen auf die Fehlermeldung und ein Bestimmen eines oder mehrerer Gewichtungsfaktoren für eine oder mehrere Fehlerkategorien für die neue Kontextkategorie basierend auf den Charakteristika des Programmcodeabschnitts umfasst.

9. Das Verfahren gemäß einem der vorherigen Ansprüche, wobei das Erzeugen (150) der einen oder der mehreren Auslöseraktionen die eine oder die mehreren Auslöseraktionen basierend auf einer aktuell empfangenen Fehlermeldung der Mehrzahl von Fehlermeldungen und basierend auf zumindest einer zuvor empfangenen Fehlermeldung der Mehrzahl von Fehlermeldungen erzeugt.

10. Das Verfahren gemäß einem der vorherigen Ansprüche, wobei das Erzeugen (150) der einen oder der mehreren Auslöseraktionen ferner auf einer Mehrzahl von Auslöseregeln eines Regelsatzes basiert, wobei das Verfahren ferner ein Anpassen der Mehrzahl von Auslöseregeln des Regelsatzes basierend auf Information bezogen auf eine Anpassung der Mehrzahl von Auslöseregeln, die von einem Steuersystem empfangen werden, umfasst.

11. Das Verfahren gemäß einem der vorherigen Ansprüche, wobei die Fehlerbewertung für die einzelnen Fehlermeldungen Teilbewertungen für die Fehlerkategorien von zumindest einer ersten Teilmenge von Fehlerkategorien umfasst, und wobei das Erzeugen (150) des einen oder der der mehreren Auslöseraktionen ferner auf den Teilbewertungen für die Fehlerkategorien von zumindest der ersten Teilmenge von Fehlerkategorien basiert.

12. Ein Computerprogramm mit einem Programmcode zum Ausführen von irgendeinem der Verfahren gemäß einem der vorherigen Ansprüche, wenn das Computerprogramm auf einem Computer, einem Prozessor oder einer programmierbaren Hardwarekomponente ausgeführt wird.

13. Ein computerimplementiertes System zum Bereitstellen eines Steuersignals für eine Softwareentwicklungsumgebung, das System umfassend
eine Eingabe (10), die konfiguriert ist zum Empfangen eines Eingabestroms, umfassend eine Mehrzahl von Fehlermeldungen von zwei oder mehr Fehlermeldungsquellen, wobei sich die Mehrzahl von Fehlermeldungen auf eine Mehrzahl von Programmcodeabschnitten des Softwareentwicklungsprojekts bezieht, wobei zumindest eine Teilmenge der Mehrzahl von Fehlermeldungen automatisch erzeugten Fehlermeldungen entspricht;
einen Vorprozessor (20), der konfiguriert ist zum Bestimmen eines Fehlertyps für einzelne Fehlermeldungen der Mehrzahl von Fehlermeldungen, wobei ein Fehlertyp einen Softwarefehlertyp anzeigt, auf den sich die Fehlermeldung bezieht, wobei ein Fehlertyp ferner eine von der Fehlerkategorie abhängige Schwere der Fehlermeldung für eine Teilmenge von Fehlerkategorien einer Mehrzahl von Fehlerkategorien anzeigt;
einen Kontextprozessor (30), der konfiguriert ist zum Bestimmen einer Kontextkategorie einer Mehrzahl von Kontextkategorien für die einzelnen Fehlermeldungen;
wobei die Kontextkategorie eine funktionale Komponente, wie beispielsweise eine von einer Schnittstelle, einer Datenbankkomponente, einer Datenspeicherkomponente, einer Benutzerschnittstelle, einer Programmierungsschnittstelle und/oder einer Datenverarbeitungskomponente, des Softwareentwicklungsprojekts anzeigt, in dem der Programmcodeabschnitt bezogen auf eine einzelne Fehlermeldung verwendet wird,
wobei die Kontextkategorie ferner einen oder mehrere Gewichtungsfaktoren für die Mehrzahl von Fehlerkategorien anzeigt;
einen Bewertungsprozessor (40), der konfiguriert ist zum Bestimmen einer Fehlerbewertung für die einzelnen Fehlermeldungen basierend auf dem Fehlertyp der Fehlermeldung und basierend auf der Kontextkategorie, wobei die Fehlerbewertung eine Schwere der Fehlermeldung basierend auf dem Fehlertyp und der Kontextkategorie der Fehlermeldung anzeigt,
wobei das Bestimmen der Fehlerbewertung die Fehlerbewertung für eine Fehlermeldung basierend auf einer Schwere der Fehlermeldung für die Mehrzahl von Fehlerkategorien berechnet, wie durch den Fehlertyp angezeigt, gewichtet mit einem durch die Kontextkategorie der Fehlermeldung angezeigten Gewichtungsfaktor;
einen Entscheidungsereignisgenerator (50), der konfiguriert ist zum Erzeugen einer oder mehrerer Auslöseraktionen für eine oder mehrere Komponenten der Softwareentwicklungsumgebung basierend auf den Fehlerbewertungen der einzelnen Fehlermeldungen; und
eine Ausgabe (60), die konfiguriert ist zum Bereitstellen des Steuersignals für die Softwareentwicklungsumgebung basierend auf der einen oder den mehreren Auslöseraktionen, wobei das Steuersignal konfiguriert ist zum Verursachen einer Aktion der Softwareentwicklungsumgebung.

## Revendications

1. Procédé implémenté par ordinateur pour fournir un signal de commande pour un environnement de développement de logiciel, le procédé comprenant :
réception (110) d'une pluralité de rapports de défaut provenant de deux ou de plusieurs sources de rapports de défaut, dans lequel la pluralité de rapports de défaut est associée à une pluralité de parties de code de programme du projet de développement de logiciel, dans lequel au moins un sous-ensemble de la pluralité de rapports de défaut correspond à des rapports de défaut générés automatiquement ;
détermination (120) d'un type de défaut pour des rapports de défaut individuels de la pluralité de rapports de défaut, dans lequel un type de défaut indique un type d'erreur logicielle auquel le rapport de défaut se rapporte, dans lequel un type de défaut indique en outre une gravité dépendante d'une catégorie de défaut du rapport de défaut pour un sous-ensemble de catégories de défaut d'une pluralité de catégories de défaut ;
détermination (130) d'une catégorie de contexte d'une pluralité de catégories de contexte pour les rapports de défaut individuels,
dans lequel la catégorie de contexte indique un composant fonctionnel, tel que l'un parmi une interface, un composant de base de données, un composant de stockage de données, une interface utilisateur, une interface de programmation et/ou un composant de traitement de données, du projet de développement de logiciel dans lequel la partie de code de programme associée à rapport de défaut individuel est utilisée,
dans lequel la catégorie de contexte indique en outre un ou plusieurs facteurs de pondération pour la pluralité de catégories de défaut ;
détermination (140) d'un score de défaut pour les rapports de défaut individuels sur la base du type de défaut du rapport de défaut et sur la base de la catégorie de contexte, dans lequel le score de défaut indique une gravité du rapport de défaut sur la base du type de défaut et de la catégorie de contexte du rapport de défaut,
dans lequel la détermination (140) du score de défaut calcule le score de défaut pour un rapport de défaut sur la base d'une gravité du rapport de défaut pour la pluralité de catégories de défaut, comme indiquée par le type de défaut, pondérée par un facteur de pondération indiqué par la catégorie de contexte du rapport de défaut ;
génération (150) d'une ou de plusieurs actions de déclencheur pour un ou plusieurs composants de l'environnement de développement de logiciel sur la base des scores de défaut des rapports de défaut individuels ; et
fourniture (160) du signal de commande pour l'environnement de développement de logiciel sur la base de la ou des plusieurs actions de déclencheur, dans lequel le signal de commande est configuré pour entraîner une action de l'environnement de développement de logiciel.

2. Procédé selon la revendication 1, dans lequel la réception (110) de la pluralité de rapports de défaut correspond à la réception d'un flux de rapports de défaut comprenant la pluralité de rapports de défaut,
et/ou dans lequel la génération (150) de la ou de plusieurs actions de déclencheur génère la ou les actions de déclencheur continuellement en fonction des nouveaux rapports de défaut reçus.

3. Procédé selon la revendication 1, dans lequel le signal de commande est configuré pour provoquer un système de version de code source à restaurer une ou plusieurs parties de code de programme sur la base des scores de défaut,
ou dans lequel le signal de commande est configuré pour provoquer un système de construction pour le projet de développement de logiciel à compiler au moins une partie du code de programme du projet de développement de logiciel,
ou dans lequel le signal de commande est configuré pour provoquer un système de déploiement pour le projet de développement de logiciel à déployer au moins une partie du code de programme du projet de développement de logiciel sur un système informatique opérationnel à exécuter,
ou dans lequel le signal de commande est configuré pour provoquer au moins un parmi un système d'exploitation, un serveur d'application et un cadre d'exécution de programme à démarrer, arrêter ou modifier l'exécution du code de programme du projet de développement de logiciel.

4. Procédé selon l'une des revendications précédentes, comprenant en outre une traduction des rapports de défaut individuels de la pluralité de rapports de défaut à partir d'un ou de plusieurs formats de rapport de défaut prédéfinis en un format de rapport de défaut commun, et dans lequel la traduction comprend une détermination d'au moins des champs obligatoires du format de rapport de défaut commun pour les rapports de défaut individuels sur la base du ou de plusieurs formats de rapport de défaut prédéfinis de la pluralité de rapports de défaut.

5. Procédé selon la revendication 4, dans lequel le ou les formats de rapport de défaut prédéfinis et/ou le format de rapport de défaut commun sont basés sur des paires attribut-valeur.

6. Procédé selon l'une des revendications précédentes, dans lequel la détermination (120) du type de défaut comprend une extraction d'un code de défaut du rapport de défaut ou une fouille de texte du rapport de défaut.

7. Procédé selon l'une des revendications précédentes, dans lequel la détermination (120) du type de défaut comprend une récupération d'informations associées au type de défaut à partir d'un référentiel de type de défaut,
et/ou dans lequel la détermination (120) du type de défaut pour un rapport de défaut de la pluralité de rapports de défauts comprend une récupération d'informations de description associées au type de défaut à partir d'un stockage de données,
et/ou dans lequel la détermination (130) de la catégorie de contexte pour un rapport de défaut de la pluralité de rapports de défaut comprend une récupération des informations de description associées à la catégorie de contexte à partir d'un stockage de données,
et/ou dans laquelle la génération (150) de la ou des actions de déclencheur comprend une récupération des informations associées à la pluralité de rapports de défaut à partir d'un stockage de données.

8. Procédé selon l'une des revendications précédentes, dans lequel la détermination (130) de la catégorie de contexte pour au moins un rapport de défaut de la pluralité de rapports de défaut comprend une détermination d'une nouvelle catégorie de contexte pour le rapport de défaut sur la base des caractéristiques de la partie de code de programme associée au rapport de défaut et la détermination d'un ou de plusieurs facteurs de pondération pour une ou plusieurs catégories de défaut pour la nouvelle catégorie de contexte sur la base des caractéristiques de la partie de code de programme.

9. Procédé selon l'une des revendications précédentes, dans lequel la génération (150) de la ou des actions de déclencheur génère la ou les actions de déclencheur sur la base d'un rapport de défaut actuellement reçu de la pluralité de rapports de défaut et sur la base d'au moins un rapport de défaut reçu précédemment de la pluralité de rapports de défaut.

10. Procédé selon l'une des revendications précédentes, dans lequel la génération (150) de la ou des actions de déclencheur est en outre basée sur une pluralité de règles de déclenchement d'un jeu de règles, dans lequel le procédé comprend en outre une adaptation de la pluralité de règles de déclenchement du jeu de règles sur la base des informations associées à une adaptation de la pluralité de règles de déclenchement reçues d'un système de commande.

11. Procédé selon l'une des revendications précédentes, dans lequel le score de défaut pour les rapports de défaut individuels comprend des sous-scores pour les catégories de défaut d'au moins un premier sous-ensemble de catégories de défaut, et dans lequel la génération (150) du ou des actions de déclencheur est en outre basée sur les sous-scores pour les catégories de défaut d'au moins le premier sous-ensemble de catégories de défaut.

12. Programme informatique comportant un code de programme pour exécuter l'un quelconque des procédés selon l'une des revendications précédentes, lorsque le programme informatique est exécuté sur un ordinateur, un processeur ou un composant matériel programmable.

13. Système implémenté par ordinateur pour fournir un signal de commande pour un environnement de développement de logiciel, le système comprenant
une entrée (10) configurée pour recevoir un flux d'entrée comprenant une pluralité de rapports de défaut provenant de deux ou de plusieurs sources de rapports de défaut, dans lequel la pluralité de rapports de défaut est associée à une pluralité de parties de code de programme du projet de développement de logiciel, dans lequel au moins un sous-ensemble de la pluralité de rapports de défaut correspond à des rapports de défaut générés automatiquement ;
un préprocesseur (20) configuré pour déterminer un type de défaut pour des rapports de défaut individuels de la pluralité de rapports de défaut, dans lequel un type de défaut indique un type d'erreur logicielle auquel le rapport de défaut se rapporte, dans lequel un type de défaut indique en outre une gravité dépendante d'une catégorie de défaut du rapport de défaut pour un sous-ensemble de catégories de défaut d'une pluralité de catégories de défaut ;
un processeur de contexte (30) configuré pour déterminer une catégorie de contexte d'une pluralité de catégories de contextes pour des rapports de défaut individuels,
dans lequel la catégorie de contexte indique un composant fonctionnel, tel que l'un parmi une interface, un composant de base de données, un composant de stockage de données, un interface utilisateur, une interface de programmation et/ou un composant de traitement de données, du projet de développement de logiciel dans lequel la partie de code de programme associée à un rapport de défaut individuel est utilisée,
dans lequel la catégorie de contexte indique en outre un ou plusieurs facteurs de pondération pour la pluralité de catégories de défaut ;
un processeur de score (40) configuré pour déterminer un score de défaut pour les rapports de défaut individuels sur la base du type de défaut du rapport de défaut et sur la base de la catégorie de contexte, dans lequel le score de défaut indique une gravité du rapport de défaut sur la base du type de défaut et de la catégorie de contexte du rapport de défaut,
dans lequel la détermination du score de défaut calcule le score de défaut pour un rapport de défaut sur la base d'une gravité du rapport de défaut pour la pluralité de catégories de défaut, comme indiquée par le type de défaut, pondérée par un facteur de pondération indiqué par la catégorie de contexte du rapport de défaut ;
un générateur d'événement de décision (50) configuré pour générer une ou plusieurs actions de déclencheur pour un ou plusieurs composants de l'environnement de développement de logiciel sur la base des scores de défaut des rapports de défaut individuels ; et
une sortie (60) configurée pour fournir le signal de commande pour l'environnement de développement de logiciel sur la base de la ou des plusieurs actions de déclencheur, dans lequel le signal de commande est configuré pour entraîner une action de l'environnement de développement de logiciel.
